## Europäisches Patentamt
## European Patent Office
## Office européen des brevets

(19)

(11) Publication number: **0 127 909**

**A1**

(12) # EUROPEAN PATENT APPLICATION

(21) Application number: **84200579.5**

(22) Date of filing: **24.04.84**

(51) Int. Cl.³: **H 02 K 17/26**
**H 01 R 39/54, H 02 K 13/10**

(30) Priority: **27.05.83 NL 8301886**

(43) Date of publication of application:
**12.12.84 Bulletin 84/50**

(84) Designated Contracting States:
**CH DE LI**

(71) Applicant: **HOOGOVENS GROEP B.V.**
**P.O. Box 10.000**
**NL-1970 CA IJmuiden(NL)**

(72) Inventor: **van den Ham, Jan Martinus**
**Jean Monnetstraat 132**
**Heemskerk(NL)**

(74) Representative: **van Buytene, Arie Jacobus et al,**
**p/a Hoogovens Groep B.V. P.O.Box 10.000**
**NL-1970 CA IJmuiden(NL)**

(54) **Synchronized induction motor.**

(57) A synchronized asynchronous three-phase induction motor provided with a rotor fed by direct current with three star-connection windings ($r_1$, $r_2$, $r_3$) connected to slip rings ($S_1$, $S_2$, $S_3$), the current to the slip rings being transferred by means of carbon brushes ($b_1$, $b_2$, $b_3$), the improvement consisting in that the conventional double rows of brushes on the slip rings are replaced by one single row of brushes of double width, the middle brush being divided into two ($b_{21}$, $b_{22}$), each thereof being connected to the positive (+) terminal of the supply voltage (V=) via a separate series resistor (R).

fig. 5

EP 0 127 909 A1

# SYNCHRONIZED INDUCTION MOTOR

The applicant names as inventor:
Jan Martinus van den Ham of Heemskerk

     The invention relates to a synchronized asynchronous three-phase induction motor, provided with a rotor fed by direct current with three star-connected windings, connected to slip rings.

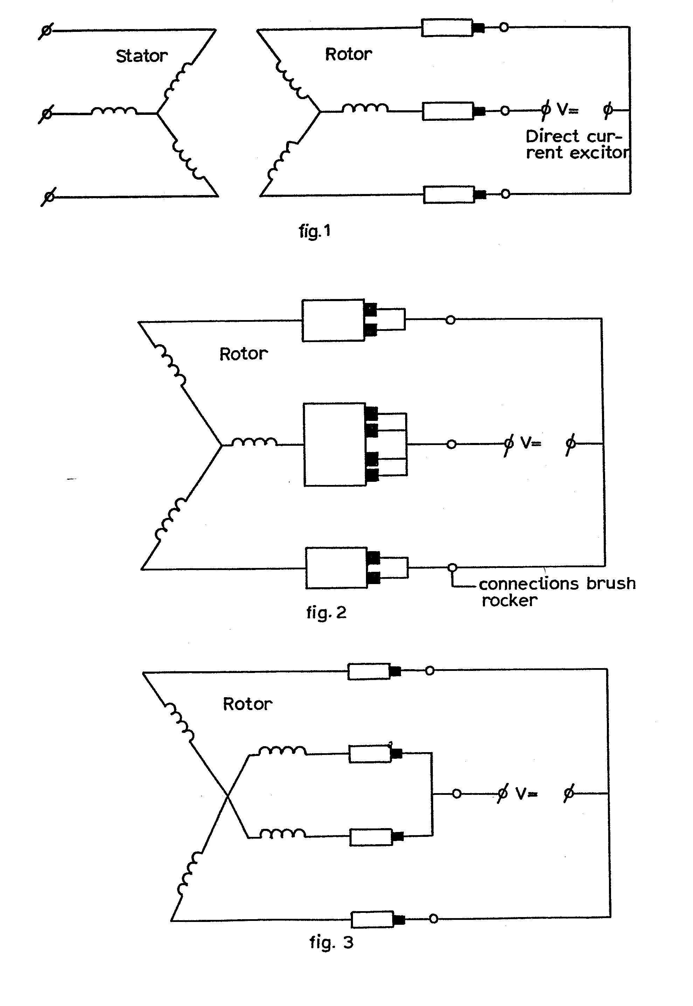

     Such machines are known and the circuit connection thereof is shown in Fig. 1. The three stator windings are, for instance, star-connected and connected to the three-phase circuit; the three rotor windings are also star-connected. After asynchronous starting, the machine is subsequently supplied with direct current excitation and, thereby, pulled into synchronism with the frequency of the power supply. The brushes that make the contact with the slip rings for the current transmission usually consist of carbon, sometimes with the addition of metal, which carbon brushes are movably enclosed in brush holders mounted on a brush rocker with which they are connected by means of a flexible stranded conductor. Auxiliary devices can be provided herewith to improve the transmission of current or to reduce or prevent sparks or arc formation, such as exposing the slip rings and brushes to a forced air flow and thus also removing the developed heat. Further, measures can be taken to keep the humidity of the air at the location of the contact brush-slip ring within the appropriate tolerances. With similar motors, notwithstanding these precautionary measures, serious disturbances have occurred regularly, such as excessive brush wear, burning through of the stranded conductors, extensive slip ring wear (particularly extensive groove formation) and sparkover on the slip rings because of excessive brush dust.

     It has appeared that many manufacturers of similar machines were of the opinion that the electric contact with a slip ring had to be made by means of several electrically paralleled carbon brushes, presumably with the intention to achieve a corresponding distribution of the current over these brushes. A practically built construction is thus known with two rows of brushes placed next to each other, each with 6 brushes around

1

half the circumference of the slip ring, each making contact with a different part of the slip ring, which construction is shown schematically in Fig. 2. In that case, the middle slip ring even has 4 adjacent rows of brushes to realize the current transmission. In practice, this construction appears to be not at all satisfactory, as the row of brushes with the highest slip ring temperature transmits an ever-increasing part of the total current, which unstable self-amplifying effect continues till practically the entire current supply runs through one row of brushes. This row is thereby overloaded twofold or fourfold respectively and will be worn out quite soon.

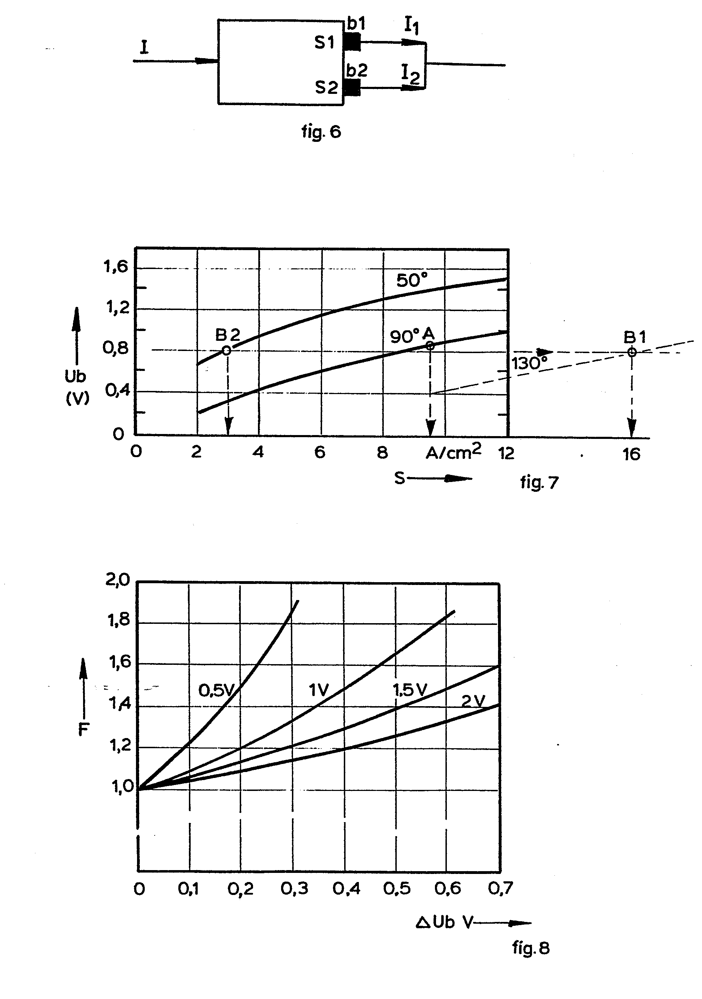

A further explanation of the poor current distribution of parallel brushes or rows of brushes placed next to each other on the same slip ring can be given on the basis of Fig. 6, this being a sketch of a slip ring with two parallel brushes in top view. Brushes $b_1$ and $b_2$ make contact with different parts of the slip ring (S1 and S2 respectively) and are electrically paralleled. The total current $I_{tot}$ is distributed over the brushes as $I_1$ and $I_2$.

The relation between the brush transmission voltage $U_b$ (over the patina), the temperature and the current density S is shown in Fig. 7. It is, for instance, the intention that both brushes $b_1$ and $b_2$ transmit approximately 9.5 A/cm². This is possible if the temperature of $b_1$ and $b_2$ is the same at the location of S1 and S2 (e.g. 90°C, adjustment A). By a slight disturbance (such as a slight difference in friction with S1 and S2), this unstable situation will change into another situation in which, for instance, brush $b_1$ has become slightly warmer. The characteristic is then lower than that of 90°C. Consequently, the parallel brush $b_2$ transmits less and brush $b_1$ more current. As a result, $b_2$ becomes cooler and its characteristic will be higher than that of 90°C. This continues until the situation $B_1$, $B_2$ results, as noticed in practice, in which brush $b_1$ reaches a temperature of 130°C and $b_2$ drops to approx. 50°C. At that point, brush $b_1$ transmits a current of approx. 16 A/cm² which means an overload of approx. 70%; brush $b_2$, with approx. 3 A/cm², is approx. 70% underloaded.

It may be concluded from the above that, because of the unstable character, various electrically paralleled brushes next to each other on a slip ring, do not guarantee reliable current transmission.

It will be clear that these difficulties with existing machines can really be traced back to a faulty rotor design and that for machines yet to be built the solution is a rotor, the winding of which is split and connected to a corresponding number of slip rings. A possible construction is shown schematically in Fig. 3. For existing machines, in particular for expensive machines of high capacity (e.g. capacities of 1 MW and more at a purchase price of ƒ300,000 and more), rewinding of an existing rotor and changing of slip rings is usually not feasible in view of the drastic character of the changes.

The invention has the object to provide a solution for the problem as outlined for synchronized asynchronous motors.

According to a first aspect of the invention, with this kind of machine, the double rows of brushes on the slip rings are replaced by one single row of double width.

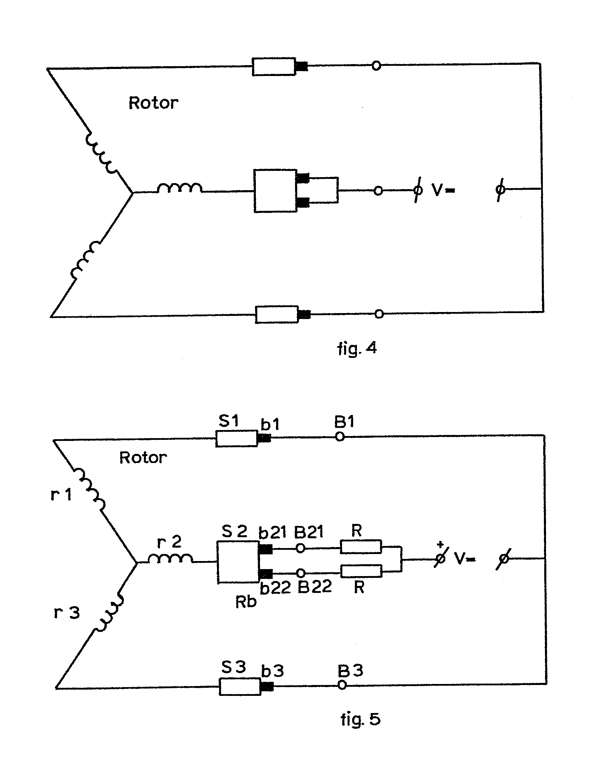

This is shown schematically in Fig. 4. Not only does it appear that the measure as mentioned provides a much better current transmission but, in addition, the mechanical stability during running is considerably better.

According to a preferably further development of this invention concept, the middle brush rocker is divided into two, and each part thereof is connected to the positive terminal of the supply voltage via a separate series resistor.

This invention will now be further discussed on the basis of Fig. 5. The three star-connected rotor windings $R_1$, $R_2$ and $R_3$ of an asynchronous motor for 2.4 and 3.3 MW respectively, which run in synchronization with a rotation of 750 rev/min and a stator supply voltage of 6 kV, 50 Hz, are connected to three slip rings $S_1$, $S_2$ and $S_3$, of which the middle one is of double width. Six or seven brushes $b_1$, $b_{21}$, $b_{22}$, $b_3$ rest on each slip ring. Brush rockers $B_1$ and $B_3$ of both outer slip rings $S_1$ and $S_3$ are both connected to the negative terminal of the supply voltage V= (approx. 32 V). The brush rocker of the middle slip ring $S_2$ is divided into two parts, indicated by $B_{21}$ and $B_{22}$ and each of these is connected to the positive terminal of the supply voltage V= via a separate series resistor R. The resistor value of the series resistors R is practically the same for each and much larger than the difference $\Delta R_b$ in both brush contact resistances at the applicable different temperatures. Thereby the direct current running to the slip ring $S_2$ is distributed reasonably evenly over both brush rows $b_{21}$ and $b_{22}$.

When for the ratio of the currents $I_1$ and $I_2$ through both brush rows $b_{21}$ and $b_{22}$ of Fig. 5 the current distribution factor $F = I_1 : I_2$ is introduced, it can be found, by consequent application of the laws of Kirchhoff to the connection, that this factor F depends on the voltage $\Delta U_b$ between the points $B_{21}$ and $B_{22}$, hence between both easily accessible brush rockers with the nominal voltage $U_R$ over the series resistor R as parameter. This relation is:

$$F = f(\Delta U_b) = \frac{U_R + \tfrac{1}{2}\Delta U_b}{U_R - \tfrac{1}{2}\Delta U_b}$$

which is shown grafically in Fig. 8. This provides good directions for the selection of the value R.

A practical choice may be calculated as follows: Assume $\Delta U_b$ = approx. 0.25 V (at approx. 15° temperature difference between both rows). If F must be lower than 1.2, it appears from Fig. 8 that $U_R$ = 1.5 V. With a total current $I_{tot}$ = 1200 A, R must become:

$$R = \frac{1.5}{\tfrac{1}{2} \times 1200} = 2.5 \text{ milli-ohm.}$$

As a practical solution for such a series resistor R, it is e.g. possible to use, each time, approx. 20 meters of single cable of 150 $mm^2$ copper core. In practice, this reaches a temperature of approx. 50°C. It appears that herewith such current equalizing can be realized that the partical currents deviate only 10% max. from each other. During operation, $\Delta U_b$ was measured between $B_{21}$ and $B_{22}$ and this appeared to amount to 0.15 V. This results in F = 1.1 and hence $I_1$ for instance 630 A and $I_2$ = 570 A.

Because the middle slip ring $S_2$ is connected permanently to the positive terminal (contrary to theories that advocate a change of polarity from time to time), the wear has become better distributed over the four rows of brushes. This amounts now to only 3.5 mm per 1000 operating hours, which comes to a lifetime of approx. one year.

This can be influenced still further by the application of two kinds of carbon brushes, namely a kind with approx. 50% Cu content for the positive middle slip ring, while for both outer slip rings a kind is used of less than 20% Cu, e.g. 17% Cu.

For three machines in operation as synchronous fan drive motors of a pellet plant, where the measures according to the invention have been applied, this appeared to lead to a considerably reduced production loss as a result of standstill, while savings in maintenance costs also appeared to be considerable. The brush wear was considerably less and, in addition, more even.

**0127909**

## C L A I M S

1. Synchronized asynchronous three-phase induction motor provided with a rotor fed by direct current with three star-connected windings connected to slip rings, where the contact with the slip rings is made by means of carbon brushes that are enclosed movably in brush holders on a brush rocker, with which they are connected electrically, characterized in that the double rows of brushes on the slip rings are replaced by one single row of double width (Figs. 4 and 5), the middle brush rocker is divided into two ($B_{21}$, $B_{22}$) and that each part thereof is connected to the positive terminal of the supply voltage (V=) via a separate series resistor (R) (Fig. 5).

2. Synchronized asynchronous three-phase induction motor according to claim 1, characterized in that both series resistors (R) are practically equal to each other and possess a much higher resistor value than the difference in brush contact resistance ($R_b$), at different temperatures, of the brushes of the two parts.

3. Synchronized asynchronous three-phase induction motor according to claim 2, characterized in that for the positive middle slip ring a brush quality with a copper content of approx. 50% is used and for both outer slip rings a quality with less than 20%, e.g. 17% Cu.

fig.1

fig. 2

fig. 3

fig. 4

fig. 5

fig. 6

fig. 7

fig. 8

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-1 488 573  (WAGNER)<br>* Page 1, line 14 - page 2, line 112; figures 1-3 * | 1,3 | H 02 K   17/26<br>H 01 R   39/54<br>H 02 K   13/10 |
| Y | GB-A-1 211 914  (ENGLISH ELECTRIC)<br>* Page 1, line 36 - page 2, line 38; figure * | 1,2 | |
| A | DE-C-  542 165  (CARBONE AG)<br>* Page 1, lines 1-70; figure 1 * | 1 | |
| A | DE-C-  664 226  (KASPEROWSKI)<br>* Page  1, line 1 - page 2, line 25; figure * | 1 | |
| A | CH-A-  104 650  (YAMAMOTO)<br>* Figure * | 1 | **TECHNICAL FIELDS SEARCHED (Int. Cl. ³)**<br><br>H 02 K<br>H 01 R |

The present search report has been drawn up for all claims

| Place of search<br>THE HAGUE | Date of completion of the search<br>03-09-1984 | Examiner<br>TIO K.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82